Europäisches Patentamt

**European Patent Office**

Office européen des brevets

(19)

(11) Numéro de publication: **0 214 025**

**B1**

(12) **FASCICULE DE BREVET EUROPEEN**

(45) Date de publication du fascicule du brevet: **19.12.90**

(51) Int. Cl.⁵: **H 02 H 6/00**

(21) Numéro de dépôt: **86401747.0**

(22) Date de dépôt: **05.08.86**

(54) **Dispositif de détermination numérique et de sauvegarde d'une image thermique.**

(30) Priorité: **23.08.85 FR 8512663**

(43) Date de publication de la demande:
**11.03.87 Bulletin 87/11**

(45) Mention de la délivrance du brevet:
**19.12.90 Bulletin 90/51**

(84) Etats contractants désignés:
**AT CH DE GB IT LI SE**

(56) Documents cités:
**EP-A-0 075 296**
**US-A-4 327 391**

**SIEMENS REVIEW, vol. 44, no. 3, mars 1977, pages 119-122; E.-F. KNÜTTER et al.: "Solid-State overload relay 7SK2"**

(73) Titulaire: **TELEMECANIQUE**
**43-45, Boulevard Franklin Roosevelt**
**F-92504 Rueil-Malmaison Cedex (FR)**

(72) Inventeur: **Henry, Gilles**
**12, rue Clouet**
**F-75015 Paris (FR)**
Inventeur: **Cadet, Christian**
**Résidence Guynemer Villa Champagne**
**F-95150 Taverny (FR)**

(74) Mandataire: **Marquer, Francis et al**
**35, Avenue Victor Hugo**
**F-78960 Voisins le Bretonneux (FR)**

## Description

La présente invention concerne un dispositif de détermination numérique et de sauvegarde de l'image thermique d'un appareil ou d'une charge, plus particulièrement applicable à un relais de protection thermique utilisant un processeur pour élaborer l'image thermique d'un moteur.

Certains relais électroniques de protection thermique pour moteurs présentent un microprocesseur qui sert notamment à simuler l'état thermique du moteur à partir de la mesure des courants de celui-ci; cette simulation s'effectue suivant des courbes exponentielles d'échauffement et de refroidissement bien connues.

Il est souhaitable que le relais de protection poursuive la simulation du refroidissement par exemple pendant plusieurs dizaines de minutes après une coupure de l'alimentation du moteur, cette coupure survenant, soit sous l'effet du relais de protection dont l'image thermique à dépassé le seuil admissible, soit sous l'effet d'une disjonction ou d'une coupure de l'alimentation du moteur et du relais. Dans ce dernier cas, la poursuite de la simulation du refroidissement suppose le maintien de l'alimentation d'une partie au moins des circuits électroniques du relais après la mise hors tension afin de disposer lors du redémarrage ultérieur du moteur d'une image thermique acceptable de celui-ci.

On peut envisager de poursuivre la modélisation thermique au moyen du processeur, en alimentant celui-ci avec une batterie ou une capacité-tampon; cette solution s'avère cependant coûteuse et trop restrictive quant au choix de la technologie et du type de processeur employé.

Il importe donc d'imaginer un dispositif à consommation réduite susceptible d'être adjoint au processeur et d'être alimenté en cas de mise hors tension du relais par une capacité-tampon relativement faible pour poursuivre l'élaboration de l'état thermique pendant la durée de la coupure.

Il est proposé dans le brevet DE—3 137 496, qui décrit un dispositif selon le préambule de la revendication 1, de mémoriser dans la capacité d'un circuit RC, au moment de la coupure de tension provoquée par le relais, l'image thermique élaborée par le microprocesseur, puis de laisser se décharger la capacité dans la résistance du RC dont la constante de temps permet de poursuivre la simulation de l'exponentielle de refroidissement caractéristique du moteur; à la remise sous tension, le microprocesseur lit la valeur analogique de tension aux bornes du RC au moyen d'un convertisseur analogique-numérique et poursuit la simulation.

Un tel dispositif a pour inconvénient de nécessiter un organe analogique et une conversion corrélative analogique-numérique, voire numérique-analogique si l'on veut charger la capacité avec une tension fonction de l'image thermique.

La Demanderesse part de la constatation que la simulation du refroidissement du moteur lors d'une coupure de tension peut être simplifiée par la substitution à l'exponentielle de refroidissement d'au moins un segment de droite dont la pente est choisie pour être adaptée à la partie "chaude" de l'exponentielle.

L'invention a notamment pour but de sauvegarder l'image thermique élaborée par un processeur associé à un appareil de protection thermique, en cas de coupure de l'alimentation de celui-ci, en actualisant l'image thermique de façon approchée, cette image étant récupérable par le processeur après le rétablissement de la tension.

Elle a pour autre but d'associer au processeur un circuit numérique à très basse consommation, simple, peu coûteux, peu encombrant et permettant d'actualiser et de transférer facilement l'image thermique approchée.

L'invention concerne un dispositif de détermination numérique et de sauvegarde d'une image thermique, relié à une source de tension et comprenant un processeur relié via un interface à au moins un capteur et susceptible d'élaborer une image numérique de l'état thermique d'un appareil ou d'une charge, une mémoire vive associée au processeur et contenant l'image thermique élaborée par le processeur, et un dispositif de sauvegarde permettant, en cas de manque de tension, d'engendrer un signal de coupure et de mémoriser l'image thermique instantanée.

Selon l'invention, le dispositif de sauvegarde comprend un organe de comptage numérique programmable relié au processeur et à une capacité destinée à assurer l'alimentation dudit organe pendant la durée maximale souhaitée; l'organe de comptage est muni d'au moins un compteur équipé d'une horloge; le compteur est chargé par le processeur en réponse au signal de coupure avec un état initial de comptage fonction de l'image thermique instantanée contenue dans la mémoire vive à l'apparition du manque de tension; et l'horloge est destinée à faire varier l'état de comptage du compteur pendant la durée du manque de tension, de manière à obtenir ainsi pendant cette durée, une image thermique approchée, la fréquence de l'horloge étant déterminée de manière à ce que l'image thermique approchée évolue selon un segment de droite qui épouse sensiblement la partie à forte décroissance de la courbe de refroidissement dudit appareil ou de ladite charge, le processeur comprenant des moyens de lecture de l'état du compteur après le rétablissement de la tension.

En d'autres termes, la fréquence de l'horloge du compteur est déterminée pour que le segment de droite figurant l'évolution de l'image thermique approchée épouse la partie "chaude", c'est-à-dire à forte décroissance, de la courbe exponentielle de refroidissement.

Il résulte des dispositions précédemment énoncées une connectique plus simple et une occupation plus réduite de la surface du support du processeur et de l'organe de temporisation numérique programmable.

Le processeur est, de préférence, un microprocesseur dont une sortie peut générer des impulsions à fréquence rapide, cette sortie étant reliée à l'organe de temporisation numérique de manière à se substituer à l'horloge lente de celui-ci en forçant des trains d'impulsions rapides dont le nombre est fonction de l'image thermique contenue dans la mémoire vive, consécutivement à un changement d'état du signal de coupure.

Il en résulte qu'à la coupure de tension, le microprocesseur porte ainsi rapidement le compteur à un premier état de comptage qui est une fonction biunivoque de l'image thermique instantanée de la mémoire vive et qu'au rétablissement de la tension le microprocesseur récupère un deuxième état de comptage en achevant rapidement le comptage par le forçage de l'horloge du compteur jusqu'au changement d'état de la sortie de l'organe de temporisation numérique.

D'autres particularités et avantages apparaîtront à la lecture de la description d'un mode de réalisation non limitatif de l'invention en regard des dessins annexés.

La figure 1 est un schéma synoptique d'un relais de protection thermique de moteur incluant le dispositif conforme à l'invention;

La figure 2 est un graphe représentant la variation de l'image thermique élaborée par le microprocesseur du relais;

Les figures 3 et 4 montrent une séquence de coupure et de rétablissement de la tension d'alimentation du relais et respectivement l'image thermique approchée correspondante:

Les figures 5A—5E montrent un chronogramme de divers signaux et états représentatifs des échanges entre l'organe de temporisation numérique programmable et le microprocesseur.

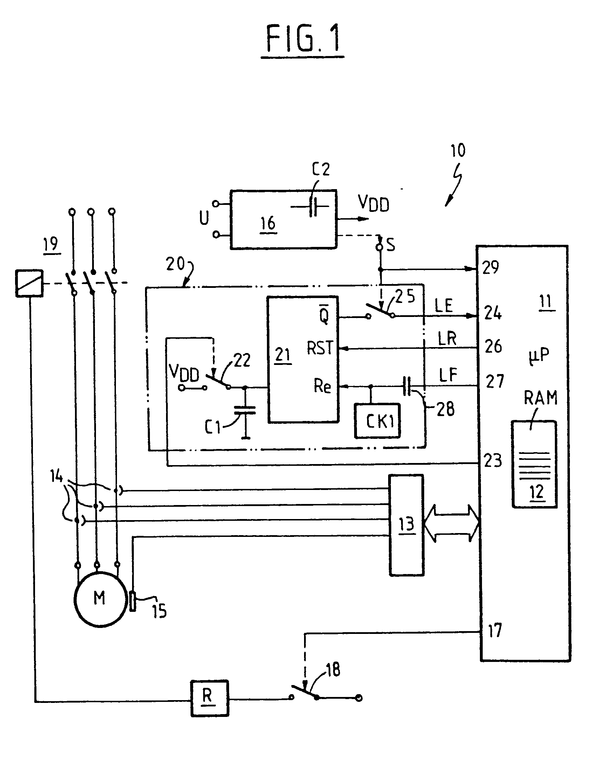

Le relais de protection thermique 10 de la figure 1 comprend un microprocesseur 11 auquel sont associés une mémoire vive 12 interne ou externe et un interface 13 relié à des capteurs de courant 14 disposés sur les lignes d'un réseau alternatif d'alimentation d'un organe sous contrôle, par exemple d'un moteur M, et/ou des capteurs de température 15.

Le microprocesseur 11 et les autres constituants du relais sont eux-mêmes alimentés à partir du réseau alternatif via une alimentation 16; le microprocesseur modélise de manière connue l'image thermique du moteur M à partir des données délivrées par les capteurs de courant 14 et/ou de température 15 à l'interface 13, cette image thermique étant stockée dans la mémoire vive 12.

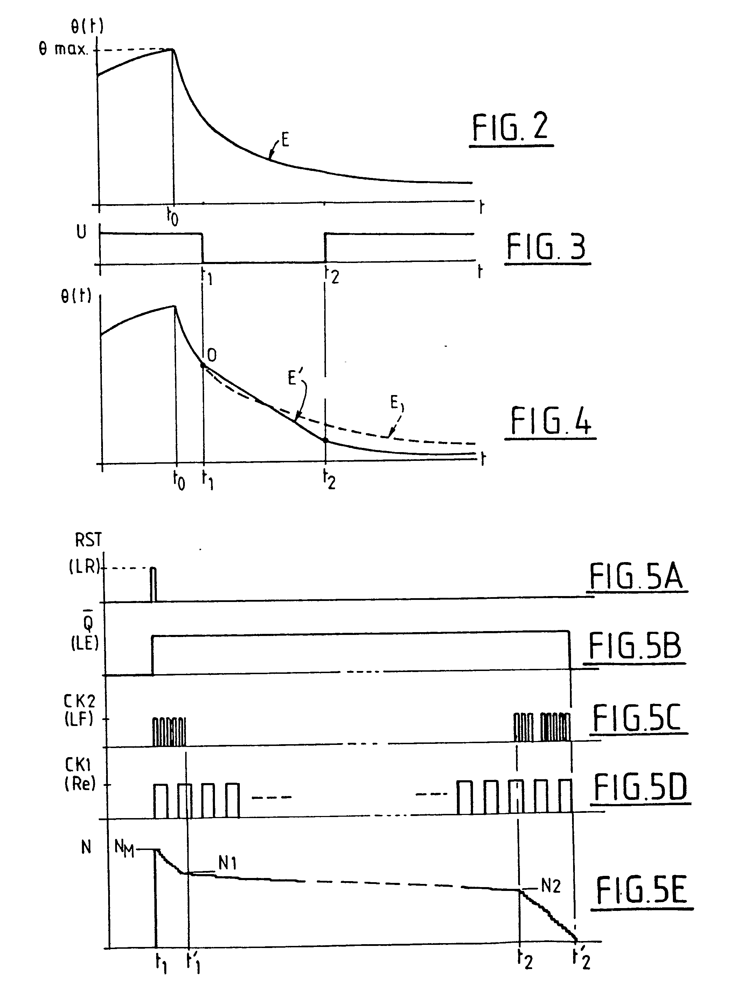

Lorsque l'image thermique numérique dépasse un seuil déterminé θ max (figure 2), le microprocesseur agit via une sortie 17 sur un interrupteur 18 qui détermine via un relayage approprié l'ouverture d'interrupteurs de puissance 19 pour couper l'alimentation du moteur.

Selon l'invention, on prévoit des moyens numériques permettant de poursuivre une modélisation approchée de l'image thermique du moteur en cas de coupure ou de défaut de la tension du réseau.

Selon le mode de réalisation préféré, ces moyens comprennent un organe de comptage numérique programmable 20 relié au microprocesseur 11 par des lignes de données et de commande, à savoir une ligne d'état LE, une ligne de réarmement LR et une ligne de forçage LF. L'organe 20 est constitué simplement dans le présent mode de réalisation par un compteur programmable 21 et par quelques éléments annexes à ce compteur.

Pour poursuivre l'alimentation de l'organe de comptage numérique 20 pendant la durée de coupure maximale souhaitée, on prévoit une capacité C1 reliée à l'alimentation 16 propre au relais via un interrupteur d'isolement 22. L'interrupteur 22 est normalement fermé pour autoriser la charge de la capacité C1; il est ouvert par un signal provenant d'une sortie 23 du microprocesseur après coupure de la tension du réseau, ce signal subsistant pendant l'absence de tension sur le microprocesseur et étant maintenu après rétablissement de la tension du réseau pendant un laps de temps permettant à l'alimentation interne 16 du relais de garantir l'autonomie du microprocesseur et l'intégrité de ses échanges avec l'organe 20.

La ligne d'état LE relie une sortie Q̄ (ou Q selon le cas) de l'organe de comptage numérique 20 à une entrée 24 du microprocesseur; il est prévu sur la ligne LE un interrupteur 25, par exemple un transistor MOS, commandé par un signal S représentatif de la coupure de tension.

La ligne de réarmement LR relie une sortie 26 du microprocesseur à une entrée RST du compteur programmable 21. La ligne de forçage LF relie une sortie 27 du microprocesseur à une entrée Re du compteur programmable 21; la ligne LF comprend un organe de filtrage 28 tel qu'un condensateur.

L'organe 20 comprend une horloge lente CK1 reliée à l'entrée Re du compteur de manière que celle-ci reçoive, soit le signal CK1, par exemple à fréquence de 10 Hz, soit un signal CK2 généré par le microprocesseur sous forme de trains d'impulsions rapides, par exemple à fréquence de l'ordre de 30 kHz. La basse fréquence du signal CK1 est réglable pour permettre d'ajuster la pente du segment de droite de refroidissement.

Il existe une relation biunivoque entre l'exponentielle de refroidissement programmée dans le microprocesseur et la variation de l'état de comptage de l'organe de comptage numérique programmable.

Au microprocesseur sont par ailleurs rattachés un chien de garde et des lignes de réarmement local et à distance. Une capacité C2 est contenue dans l'alimentation 16 afin d'assurer une brève autonomie du microprocesseur 11.

Le fonctionnement du dispositif va à présent être décrit en regard des figures 2 à 5E.

Le relais de protection 10 modélise, à partir des données délivrées par les capteurs 14, une image thermique numérique θ du moteur M. Cette image est mémorisée dans la mémoire vive 12. Tant qu'elle reste inférieure à une valeur θ max et s'il survient une coupure de la tension U, d'alimentation du relais, le microprocesseur commande l'arrêt du moteur; quand l'image thermique θ atteint à l'instant $t_0$ la valeur θ max (figure 2), la sortie 17 du microprocesseur 11 entraîne via l'interrupteur 18 et le relais R l'ouverture des interrupteurs de puissance 19. Le moteur 11 n'est plus alimenté et commence à se refroidir, tandis que son image thermique θ commence à diminuer selon une courbe exponentielle E (figure 2).

Si une coupure de la tension U d'alimentation du relais survient à l'instant $t_1$ (figure 3), le relais va continuer de simuler selon un segment de droite OE' le refroidissement du moteur pendant une durée qui peut aller jusqu'à plusieurs dizaines de minutes.

Le signal de coupure S est généré et, d'une part, ferme l'interrupteur 25, d'autre part, active l'entrée 29 du microprocesseur qui génère à sa sortie 26 une impulsion (figure 5A) transmise par la ligne LR à l'entrée RST du compteur programmable 21; celui-ci est dès lors armé et commence à décrémenter (figure 5E) à partir de $N_M$ sous l'effet du signal d'horloge CK1 qui active l'entrée Re (figure 5D), tandis que la sortie $\overline{Q}$ du compteur 21 passe à l'état logique 1 (figure 5B), cet état étant transmis par la ligne LE à l'entrée 29 du microprocesseur. Des trains d'impulsions rapides sont alors propagés par la sortie 27 du microprocesseur, la ligne LF et l'organe de filtrage 28 jusqu'à l'entrée Re du compteur 21, qu'ils forcent en remplaçant le signal d'horloge basse fréquence CK1. Le nombre d'impulsions k(Nm−Nl) est représentatif de l'image thermique θ(t1). Quand le décomptage atteint N1 à l'instant $t'_1$, le signal 27 cesse et seul le signal d'horloge lent CK1 continue (figures 5C et 5D). La sortie $\overline{Q}$ du compteur programmable 20 reste à l'état logique 1 jusqu'à ce que le décomptage ait atteint une valeur déterminée.

Lorsqu'à l'instant $t_2$ la tension U d'alimentation du relais est rétablie, le microprocesseur vérifie, à son entrée 24, l'état logique de $\overline{Q}$; si $\overline{Q}=0$, l'état thermique du moteur est considéré comme nul; si $\overline{Q}=1$, cela signifie que le décomptage n'a pas atteint la valeur prédéterminée, et le microprocesseur émet à sa sortie 27 des impulsions rapides qui forcent l'entrée Re du compteur, de manière à décrémenter celui-ci rapidement. Le nombre kN2 d'impulsions est compté par le microprocesseur jusqu'à ce que $\overline{Q}$ passe à l'état logique 0 à l'instant $t'_2$ (figures 5B et 5E). Le nombre d'impulsions étant significatif de l'état thermique approché au rétablissement de la tension, il est pris par le microprocesseur comme état thermique approché à l'instant $t_2$.

La capacité C2 comprise dans l'alimentation 16 est destinée à assurer une brève autonomie du microprocesseur et nécessite un certain temps de charge lors du rétablissement de la tension; il convient de noter que le microprocesseur ne commence à reprendre l'état thermique du compteur programmable que s'il dispose d'une réserve d'énergie suffisante pour subir une nouvelle panne d'alimentation.

L'interrupteur 22 n'est fermé par la sortie 23 du microprocesseur au rétablissement de la tension que si $\overline{Q}$ est à l'état logique 1, pour éviter le réarmement automatique du compteur programmable.

Il va de soi que l'on peut apporter des modifications au dispositif décrit sans sortir du cadre de l'invention tel que défini par les revendications. Le dispositif est en particulier applicable à tout appareil électrique de protection comportant un processeur de modélisation thermique d'un appareil ou d'une charge susceptible de dissipation thermique, pour effectuer une incrémentation ou décrémentation linéaire du phénomène thermique en cas de coupure de l'alimentation de l'appareil.

## Revendications

1. Dispositif de détermination numérique et de sauvegarde d'une image thermique, relié à une source de tension (16) et comprenant un processeur (11) relié via un interface (13) à au moins un capteur (14, 15) et susceptible d'élaborer une image numérique de l'état thermique d'un appareil (15) ou d'une charge, une mémoire vive (12) associée au processeur (13) et contenant l'image thermique élaborée par le processeur, et un dispositif de sauvegarde permettant, en cas de manque de tension, d'engendrer un signal de coupure (S) et de mémoriser l'image thermique instantanée, caractérisé par le fait que le dispositif de sauvegarde comprend un organe de comptage numérique programmable (20) relié au processeur (11) et à une capacité (C1) destinée à assurer l'alimentation dudit organe pendant la durée maximale souhaitée, que l'organe de comptage est muni d'au moins un compteur (21) équipé d'une horloge (CK1), que le compteur est chargé par le processeur (11) en réponse au signal de coupure (S) avec un état initial de comptage fonction de l'image thermique instantanée contenue dans la mémoire vive (12) à l'apparition du manque de tension, et que l'horloge (CK1) est destinée à faire varier l'état de comptage du compteur pendant la durée du manque de tension, de manière à obtenir ainsi pendant cette durée, une image thermique approchée, la fréquence de l'horloge (CK1) étant déterminée de manière à ce que l'image thermique approchée évolue selon un segment de droite qui épouse sensiblement la partie à forte décroissance de la courbe de refroidissement dudit appareil ou de ladite charge, le processeur (11) comprenant des moyens de lecture de l'état du compteur après le rétablissement de la tension.

2. Dispositif numérique selon la revendication 1, caractérisé par le fait que l'organe de comptage numérique programmable présente une sortie logique ($\overline{Q}$) changeant d'état en fin de comptage et reliée par une ligne d'état (LE) à une entrée du processeur (11), tandis que le processeur comprend une sortie apte à générer un signal (CK2) constitué d'impulsions à fréquence rapide et reliée par une ligne de forçage (LF) à l'organe de comptage numérique pour substituer ledit signal rapide au signal d'horloge lente (CK1) de celui-ci consécutivement à un changement d'état d'un signal de coupure (S) représentatif du manque de tension.

3. Dispositif numérique selon la revendication 2, caractérisé par le fait que la ligne d'état (LE) reliant la sortie (Q̄) de l'organe de comptage numérique à l'entrée du processeur (11) comprend un interrupteur (25) commandé par le signal de coupure (S).

4. Dispositif numérique selon l'une des revendications 1 à 3, caractérisé par le fait que la capacité (C1) assurant l'alimentation de l'organe de comptage numérique pendant la durée du défaut de tension est reliée à la source de tension via un interrupteur d'isolement (22) commandé par le processeur (11) et maintenu ouvert tant que l'autonomie d'alimentation du processeur n'est pas réalisée.

## Patentansprüche

1. Vorrichtung zur digitalen Bestimmung und zur Sicherung eines thermischen Abbildes, die an eine Spannungsquelle (16) angeschlossen ist und eine Recheneinheit (11) aufweist, welche durch eine Grenzfläche (13) an mindestens einer Erfasser (14, 15) angeschlossen ist und ein digitales Abbild des thermischen Zustandes eines Apparates (15) oder einer Last ausarbeiten kann, einen Lebenspeicher (12), der der Recheneinheit (13) zugeordnet ist und das von der Recheneinheit ausgearbeitete thermische Abbild enthält, sowie eine Sicherungsvorrichtung, die es ermöglicht, bei Spannungsausfall ein Ausfallsignal (S) zu erzeugen und das momentane thermische Abbild zu speichern, dadurch gekennzeichnet, dass die Sicherungsvorrichtung ein programmierbares digitales Zählorgan (20) aufweist, das an die Recheneinheit (11) angeschlossen ist und an eine Kapazität (C1), deren Aufgabe est ist, besagtes Organ während der gewünschten Maximaldauer zu speisen, dass besagtes Zählorgan mindestens einen mit einer Uhr (CK1) versehenen Zähler (21) aufweist, dass der Zähler von der Recheneinheit (11) auf ein Ausfallsignal (S) hin mit einem anfänglichen Zählstatus aufgeladen wird, der von dem momentanen thermischen Abbild abhängig ist, welches beim Spannungsausfall im Lebendspeicher (12) enthalten ist und dass die Uhr (CK1) dazu bestimmt ist, den Zählstand des Zählers während der Spannungsausfallperiode abzuändern, um auf diese Weise während der besagten Periode ein angenähertes thermisches Abbild zu erhalten, wobei die Frequenz der Uhr (CK1) so bestimmt wird, dass das angenäherte thermische Abbild gemäss dem Abschnitt einer Geraden verläuft, die im wesentlichen die Form des Teils mit starker Abnahme der Abkühlkurve des besagten Apparates oder der besagten Last annimmt, und die Recheneinheit (11) Mittel zur Ablesung des Zählstandes nach Wiederherstellung der Spannung aufweist.

2. Digitalvorrichtung nach Anspruch 1, dadurch gekennzeichnet, dass das programmierbare digitale Zählorgan einen logischen Ausgang (Q̄) aufweist, der am Ende der Zählung seinen Status ändert und durch eine Statuslinie (LE) an den Eingang Recheneinheit (11) angeschlossen ist, während die Recheneinheit einen Ausgang aufweist, der ein von Impulsen schneller Frequenz gebildetes Signal (CK2) erzeugen kann und durch eine Forcierlinie (LF) an das digitale Zählorgan angeschlossen ist, um durch besagtes schnelles Signal das langsame Uhrensignal (CK1) zu ersetzen, infolge eines Statuswechsels eines Ausfallsignals (S), welches den Spannungsausfall anzeigt.

3. Digitalvorrichtung nach Anspruch 2, dadurch gekennzeichnet, dass die Statuslinie (LE), welche den Ausgang (Q̄) des digitalen Zählorgans an den Eingang der Recheneinheit (11) anschliesst, einen vom Ausfallsignal (S) gesteuerten Schalter (25) aufweist.

4. Digitalvorrichtung nach einem der Ansprüche 1 bis 3, dadurch gekennzeichnet, dass die Kapazität (C1), welche das digitale Zählorgan während des Spannungsausfalls speist, an die Spannungsquelle durch einen Isolierschalter (22) angeschlossen ist, welcher durch die Recheneinheit (11) gesteuert wird und der geöffnet bleibt, solange die unabhängige Versorgung der Recheneinheit nicht erreicht ist.

## Claims

1. A device for digitally determining and safeguarding a thermal image, connected to a voltage source (16) and comprising a processor (11) connected via an interface (13) to at least one sensor (14, 15) and capable of forming a digital image of the thermal state of an apparatus (15) or of a load, a random access memory (12) associated with the processor (13) and containing the thermal image formed by the processor and a safeguard device for producing a cut-off signal (S) and memorizing the instantaneous thermal image should there be a lack of voltage, characterized by the fact that the safeguard device comprises a programmable digital counting member (20) connected to the processor (11) and to a capacity (C1) determined for ensuring the power supply of said member during the desired maximum duration, in that the counting member has at least one counter (21) equipped with a clock (CK1), in that the counter is charged by the processor (11) in response to the cut-off signal (S) with a initial counting state which is a function of the instantaneous thermal image contained in the random access memory (12) on the occurrence of the lack of voltage, and in that the clock (CK1) is intended for modifying the counting state of the counter during the time interval when the voltage is absent, so as to obtain, during said lapse of time, an approximate thermal image, the frequency of the clock (CK1) being determined so that the approximate thermal image evolves according to a straight line segment which substantially follows the rapidly decreasing part of the cooling curve of said apparatus or said load, the processor (11) comprising means for reading the state of the counter after restoration of the voltage.

2. The digital device as claimed in claim 1, characterized in that the programmable digital counting member has a logic output ($\overline{Q}$) changing state at the end of counting and connected by a status line (LE) to an input of the processor (11), whereas the processor has an output capable of generating a signal (CK2) formed of rapid frequency pulses and connected by a forcing line (LF) to the digital counting member for substituting said rapid signal for said slow clock signal (CK1) thereof, following the change of state of a cut-off signal (S) representative of the lack of voltage.

3. The digital device as claimed in claim 2, characterized in that the status line (LE) connecting the output ($\overline{Q}$) of the digital counting member to the input of the processor (11) comprises a switch (25) controlled by the power-cut signal (S).

4. The digital device as claimed in one of claims 1 to 3, characterized in that the capacity (C1) insuring the power supply of the digital counting member during the time of the voltage fault is connected to the voltage source via an isolating switch (22) controlled by the processor (11) and kept open as long as the power supply independence of the processor is not achieved.

# FIG.1

EP 0 214 025 B1

FIG. 2

FIG. 3

FIG. 4

FIG.5A

FIG.5B

FIG.5C

FIG.5D

FIG.5E

2